# EUROPÄISCHE PATENTSCHRIFT

(11) **EP 1 963 654 B1**
(45) Veröffentlichungstag und Bekanntmachung des Hinweises auf die Patenterteilung: **03.03.2010**
(21) Anmeldenummer: 06828685.5
(22) Anmeldetag: 15.12.2006
(51) Int. Cl.: F02F 3/22, F16J 1/16, F01P 3/08

(54) **KOLBEN FÜR EINEN VERBRENNUNGSMOTOR**
PISTON FOR AN INTERNAL COMBUSTION ENGINE
PISTON POUR MOTEUR A COMBUSTION INTERNE

(30) Priorität: 21.12.2005 DE 102005061059
(43) Veröffentlichungstag der Anmeldung: 03.09.2008
(73) Patentinhaber: Mahle International GmbH, 70376 Stuttgart (DE)
(72) Erfinder: BENZ, Arnold, 73773 Aichwald (DE); KOLLOTZEK, Helmut, 73557 Mutlangen (DE); LEITL, Markus, 73630 Remshalden (DE); SCHILLING, Sven, 71404 Korb (DE); LIMBACH, Ernst, 73630 Remshalden (DE); ZVONKOVIC, Josip, 71384 Weinstadt (DE)
(74) Vertreter: Pohle, Reinhard
(86) Internationale Anmeldenummer: PCT/DE2006/002254
(87) Internationale Veröffentlichungsnummer: WO 2007/076811

(56) Entgegenhaltungen:
- EP-A- 1 077 324
- DE-A1- 2 831 566
- DE-A1- 3 719 469
- DE-A1- 3 732 927
- FR-A- 1 454 468
- US-B1- 6 513 477

## Beschreibung

Die Erfindung betrifft einen Kolben für einen Verbrennungsmotor mit einem im kolbenbodenseitigen Randbereich des Kolbens angeordneten, ringförmigen Kühlkanal, mit mindestens einer Ölzulaufbohrung und mindestens einer Ölablaufbohrung, die jeweils mit einer Öffnung des Kühlkanals verbunden sind und in den Innenraum des Kolbens münden, mit einem Kolbenschaft, mit vom Kolbenschaft gehaltenen, auf radial einander gegenüberliegenden Seiten angeordneten Bolzennaben mit je einer Nabenbohrung, und mit mindestens einer im Innenraum des Kolbens angeordneten und auf die mindestens eine Ölzulaufbohrung gerichteten Ölspritzdüse zum Einleiten von Kühlöl in den Kühlkanal.

Aus der Offenlegungsschrift DE 102 14 830 A1 ist ein Kolben bekannt, der einen im kolbenbodenseitigen Randbereich angeordneten, ringförmigen Kühlkanal aufweisen, der auf der kolbenbodenabgewandten Seite eine Öleinlassöffnung aufweist, über die eine Ölspritzdüse Kühlöl in den Kühlkanal spritzt. Begrenzt wird der Kühlkanal radial außen von einer die Ringpartie tragenden Anformung und radial innen vom zur Verbrennungsmulde ausgebildeten Kolbenboden, sodass das im Kühlkanal fließende Kühlöl nur die Ringpartie und den radial äußeren Bereich der Verbrennungsmulde kühlen kann.

Aus der japanischen Patentanmeldung JP 09 079116 ist ein Kolben bekannt, bei dem die gesamte Kolbenbodenunterseite von Kühlöl angesprüht und damit gekühlt wird.

Ein Kolben der eingangs genannten Art ist auch aus der Offenlegungsschrift DE 28 31 566 A1 bekannt. Neben einer Düsenspitze, die Öl in eine mit einem Kühlkanal verbundene Ölzulaufbohrung spritzt, weist der aus der DE 28 31 566 bekannt Motor eine weitere Düsenspitze auf, die Öl spiralförmig nach oben auf die Seitenwand des Kolbeninnenraumes spritzt, um auf diese Weise den gesamten Kolben durch direktes Ansprühen mit Öl zu kühlen.

Nachteilig ist hierbei, dass weder in der Offenlegungsschrift DE 102 14 830 noch in der japanischen Patentanmeldung JP 09 079116 oder in der Offenlegungsschrift DE 28 31 566 Maßnahmen vorgesehen sind, die der separaten Kühlung der Bolzennaben dienen.

Hiervon ausgehend liegt der Erfindung die Aufgabe zugrunde, den genannten Nachteil des Standes der Technik zu vermeiden und die Kühlung der Bolzennaben zu verbessern.

Gelöst wird diese Aufgabe dadurch, dass zur Kühlung der Bolzennaben die mindestens eine Ölspritzdüse mit je einer zusätzlichen, auf je eine Bolzennabe ausgerichteten Spritzdüse verbunden ist.

In einer vorteilhaften Ausgestaltungen der Erfindung sind die kolbenbodenseitigen Bereiche der Bolzennaben nach radial innen verstärkt, und sind die Spritzdüsen jeweils auf einen verstärkten Bereich der Bolzennaben ausgerichtet.

In einer weiteren vorteilhaften Ausgestaltung sind in die radial innen liegenden Seiten der verstärkten Bereiche der Bolzennaben Öltaschen zur kurzfristigen Speicherung von Öl eingeformt .

Einige Ausführungsbeispiele der Erfindung werden im Folgenden anhand der Zeichnungen beschrieben. Es zeigen
- Fig. 1: einen Schnitt durch einen Kolben mit einem gekühlten Ringträger, dessen Ablaufbohrung auf den oberen Nabenbereich gerichtet ist, sodass das aus dem Kühlkanal des Ringträgers ablaufende Öl zur Kühlung der Nabe ver- wendbar ist,
- Fig. 2: einen Schnitt entlang der Linie AA in Figur 1, der eine in den oberen Naben- bereich eingeformte Öltasche zeigt, deren Funktion darin besteht, Öl zur Schmierung des Kolbenbolzens zu speichern und
- Fig. 3: den Kolben gemäß Fig. 1 im Schnitt, bei dem die Ölspritzdüse zum Einleiten von Kühlöl in den Kühlkanal des gekühlten Ringträgers mit einer weiteren auf den oberen Nabenbereich gerichteten Spritzdüse zur Bildung einer Doppel- spritzdüse verbunden ist.

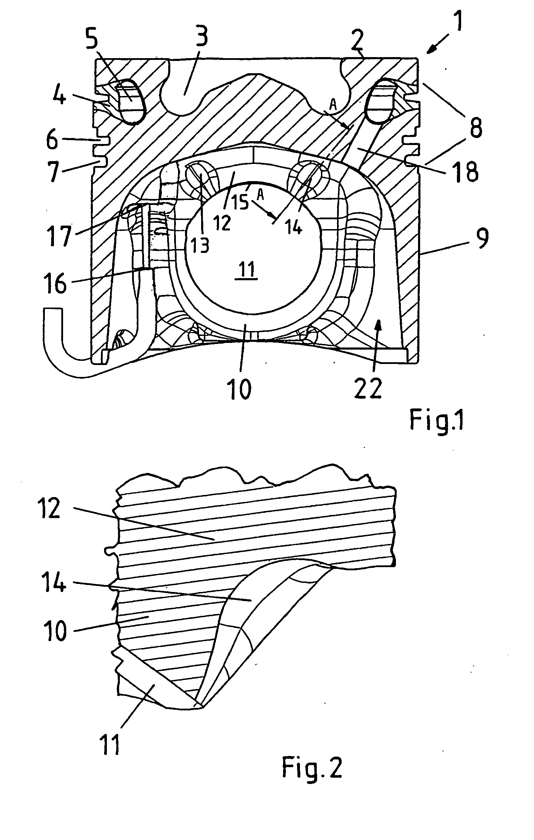

Fig. 1 zeigt das Schnittbild eines Kolbens 1 für einen Verbrennungsmotor, in dessen Kolbenboden 2 eine Verbrennungsmulde 3 eingeformt ist. Der Kolben 1 kann aus Stahl, Grauguss, Aluminium oder einem anderen Leichtmetall, wie beispielsweise aus Magnesium bestehen. Im kolbenbodenseitigen Randbereich des Kolbens 1 ist ein gekühlter Ringträger 4 für einen in der Figur nicht dargestellten Kompressionsring angeordnet, der radial innen einen ringförmigen Kühlkanal 5 aufweist. Kolbenbodenabgewandt schließen sich an den Ringträger 4 eine 2. Nut 6 für einen weiteren Kompressionsring und eine 3. Nut 7 für einen Ölabstreifring an. Mit der aus dem Ringträger 4 und aus den Nuten 6 und 7 gebildeten Ringpartie 8 ist ein umlaufender Kolbenschaft 9 verbunden, in den auf radial einander gegenüberliegenden Seiten je eine Bolzennabe 10 mit je einer Nabenbohrung 11 eingeformt ist.

Die kolbenbodenseitigen Bereiche 12 der Bolzennaben 10 sind nach radial innen verstärkt, wodurch sich in diesen Bereichen 12 je ein nach radial innen vergrößerter Zenit 15 der Nabenbohrungen 11, eine geringere Flächenpressung des Bolzens auf den Zenit 15 der Nabenbohrungen 11 und damit ein geringerer Verschleiß dieser im Motorbetrieb an höchsten belasteten Bereiche der Nabenbohrungen 11 ergeben.

In die radial inneren Seiten der kolbenbodenseitigen Bereiche 12 der Nabenbohrungen 11 sind Öltaschen 13 und 14 eingeformt, deren Zweck darin besteht, während des Motorbetriebes Öl zu speichern, das zur verbesserten Schmierung des (in der Figur nicht dargestellten) Kolbenbolzens genutzt wird. Dies trägt zusätzlich zu einer Verringerung des Verschleißes des Kolbenbolzens und der Nabenbohrung 11 bei.

Das zum Kühlen des Ringträgers 4 erforderliche Öl wird von mindestens einer Ölspritzdüse 16 über je eine Ölzulaufbohrung 17 direkt in den radial innerhalb des Ringträgers 4 angeordneten Kühlkanal 5 gespritzt. Nach Durchlaufen des Kühlkanals 5 tritt das Öl aus Ölablaufbohrungen 18 wieder aus. Die Ölablaufbohrungen 18 sind in kolbenbodenabgewandte Richtung gesehen nach radial innen und in Richtung der Bereiche 12 der Bolzennaben 10 ausgerichtet, sodass das aus dem Kühlkanal 5 ausfließende Öl auf die kolbenbodenseitigen Bereiche 12 der Bolzennaben 10 auftrifft und diese damit kühlt.

Fig. 2 stellt einen Teilschnitt durch den Kolben 1 im kolbenbodenseitigen Bereich 12 der Bolzennabe 10 entlang der Linie AA in Fig. 1 dar, der die Form der Öltasche 14 zeigt, in der Öl zum Schmieren des in den Figuren nicht dargestellten Kolbenbolzens gespeichert wird.

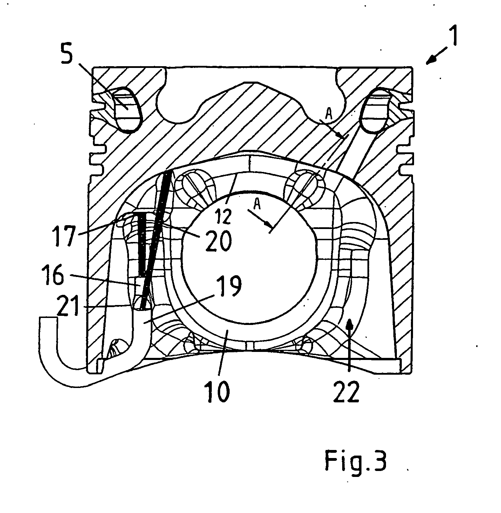

In der Figur 3 ist eine Ausgestaltung der Ölspritzdüse 16 gezeigt, die mit einer zusätzlichen Spritzdüse 19 verbunden ist, deren Funktion darin besteht, die kolbenbodenseitigen Bereiche 12 der Bolzennaben 10 durch direktes Anspritzen mit Öl 20 zu kühlen. Die Spritzdüsen 16 und 19 sind im vorliegenden Ausführungsbeispiel zu einer integrierten Doppelspritzdüse 21 vereint, die vorteilhafterweise auch auf der radial gegenüberliegenden Seite des Kolbens 1 angeordnet ist, um auch die dortige Bolzennabe durch Anspritzen zu kühlen und gleichzeitig Öl über die dortige Ölzulauföffnung in den Kühlkanal 5 einzuleiten.

Wie in den Figuren dargestellt kann der Kühlkanal 5 Teil eines gekühlten Ringträgers 4 sein. Denkbar ist aber auch, den Kühlkanal 5 im Abstand vom Ringträger anzuordnen, sodass dadurch die Kühlung der Verbrennungsmulde 3 verbessert wird. Weiter hin ist es insbesondere bei kleineren Kolben ausreichend, nur die Bolzennabe 10 unter ausschließlicher Verwendung einer Spritzdüse 19 mittels Anspritzkühlung zu kühlen, wobei die Öltaschen 13, 14 zur Kühlung und Schmierung der Bolzennabe 10 mit Kühlöl gefüllt werden.

### Bezugszeichenliste

- 1: Kolben
- 2: Kolbenboden
- 3: Verbrennungsmulde
- 4: gekühlter Ringträger
- 5: Kühlkanal
- 6: 2. Nut
- 7: 3. Nut
- 8: Ringpartie
- 9: Kolbenschaft
- 10: Bolzennabe
- 11: Nabenbohrung
- 12: kolbenbodenseitiger Bereich des Bolzennabe 10
- 13, 14: Öltasche
- 15: Zenit der Nabenbohrung 11
- 16: Ölspritzdüse
- 17: Ölzulaufbohrung
- 18: Ölablaufbohrung
- 19: Spritzdüse
- 20: Öl
- 21: Doppelspritzdüse
- 22: Kolbeninnenraum

## Patentansprüche

1. Kolben (1) für einen Verbrennungsmotor
- mit einem im kolbenbodenseitigen Randbereich des Kolbens (1) angeordneten, ringförmigen Kühlkanal (5),
- mit mindestens einer Ölzulaufbohrung (17) und mindestens einer Ölablaufbohrung (18), die jeweils mit einer Öffnung des Kühlkanals (5) verbunden sind und in den Innenraum (22) des Kolbens (1) münden,
- mit einem Kolbenschaft (9),
- mit vom Kolbenschaft (9) gehaltenen, auf radial einander gegenüberliegenden Seiten angeordneten Bolzennaben (10) mit je einer Nabenbohrung (11), und
- mit mindestens einer im Innenraum (22) des Kolbens (1) angeordneten und auf die mindestens eine Ölzulaufbohrung (17) gerichteten Ölspritzdüse (16) zum Einleiten von Kühlöl in den Kühlkanal (5),
**dadurch gekennzeichnet, dass** zur Kühlung der Bolzennaben (10) die mindestens eine Ölspritzdüse (16) mit je einer zusätzlichen, auf je eine Bolzennabe (10) ausgerichteten Spritzdüse (19) verbunden ist.

2. Kolben nach Anspruch 1, **dadurch gekennzeichnet, dass** die kolbenbodenseitigen Bereiche (12) der Bolzennaben (10) nach radial innen verstärkt sind, und dass die Spritzdüsen (19) jeweils auf einen verstärkten Bereich (12) der Bolzennaben (10) ausgerichtet sind.

3. Kolben nach Anspruch 2, **dadurch gekennzeichnet, dass** in die radial innen liegenden Seiten der verstärkten Bereiche (12) der Bolzennaben (10) Öltaschen (13, 14) zur kurzfristigen Speicherung von Öl eingeformt sind.

## Claims

1. Piston (1) for an internal combustion engine
- having an annular cooling channel (5) arranged in the edge area of the piston (1) on the piston crown side,
- having at least one oil inlet hole (17) and at least one oil outlet hole (18) each connected to an opening of the cooling channel (5) and opening into the interior (22) of the piston (1),
- having a piston skirt (9),
- having pin bosses (10) held by the piston skirt (9) and arranged on radially opposite sides each with a boss bore (11) and
- having at least one oil spray nozzle (16) arranged in the interior (22) of the piston (1) and aligned with the at least one oil inlet hole (17) for introducing cooling oil into the cooling channel (5),
**characterized in that** for cooling of the pin bosses (10) the at least one oil spray nozzle (16) is connected in each case to an additional spray nozzle (19) aligned with one pin boss (10) each.

2. Piston according to Claim 1, **characterized in that** those areas (12) of the pin bosses (10) on the piston crown side are reinforced radially inwards, and **in that** the spray nozzles (19) are each aligned with a reinforced area (12) of the pin bosses (10).

3. Piston according to Claim 2, **characterized in that** oil pockets (13, 14) for short-term storage of oil are integrally cast into the radially inner sides of the reinforced areas (12) of the pin bosses (10).

## Revendications

1. Piston (1) pour un moteur à combustion
- avec un canal de refroidissement annulaire (5) disposé dans la zone de bord du piston (1) du côté de la tête de piston,
- avec au moins un orifice d'alimentation d'huile (17) et au moins un orifice d'évacuation d'huile (18) qui sont respectivement reliés à une ouverture du canal de refroidissement (5) et aboutissent dans l'espace intérieur (22) du piston (1).
- avec une tige de piston (9),
- avec des moyeux d'axe (10) maintenus par la tige de piston (9) et disposés sur des côtés radialement opposés l'un par rapport à l'autre, avec respectivement un orifice de moyeu (11), et
- avec au moins une buse de pulvérisation d'huile (16) disposée dans l'espace intérieur (22) du piston (1) et orientée vers l'orifice d'alimentation d'huile (17) au moins en présence pour l'introduction d'huile de refroidissement dans le canal de refroidissement (5),
**caractérisé en ce que**, pour refroidir les moyeux d'axe (10), la buse de pulvérisation d'huile (16) au moins en présence est reliée à respectivement une buse de pulvérisation (19) supplémentaire orientée respectivement sur un moyeu d'axe (10).

2. Piston selon la revendication 1, **caractérisé en ce que** les sections (12) des moyeux d'axe (10) situées du côté de la tête de piston sont renforcées radialement vers l'intérieur, et que les buses de pulvérisation (19) sont orientées respectivement sur une section renforcée (12) des moyeux d'axe (10).

3. Piston selon la revendication 2, **caractérisé en ce que** des poches d'huile (13, 14) sont formées dans les côtés radialement intérieurs des sections renforcées (12) des moyeux d'axe (10) pour l'accumulation provisoire d'huile.
